# EUROPEAN PATENT SPECIFICATION

(11) **EP 3 167 717 B1**
(45) Date of publication and mention of the grant of the patent: **09.09.2020**
(21) Application number: 15818573.6
(22) Date of filing: 30.06.2015
(51) Int. Cl.: A01N 63/00, A01N 25/00

(54) **BACTERIOSTATIC AGENT AND BIOCIDE FORMULATIONS**
BAKTERIOSTATISCHES MITTEL UND BIOZIDE FORMULIERUNGEN
AGENT BACTÉRIOSTATIQUE ET FORMULATIONS BIOCIDES

(30) Priority: 10.07.2014 ES 201431040
(43) Date of publication of application: 17.05.2017
(73) Proprietor: Seipasa S.A., 22240 Tardienta (Huesca) (ES)
(72) Inventor: PELEATO ESTAÚN, Pedro Luis, 46250 L'Alculdia (Valencia) (ES); ESPINOSA ESCRIG, Francisco, 46250 L'Alculdia (Valencia) (ES)
(74) Representative: Martin Alvarez, Juan Enrique
(86) International application number: PCT/ES2015/070510
(87) International publication number: WO 2016/005634

(56) References cited:
- WO-A1-2009/126473
- ES-T3- 2 370 561
- US-A- 4 000 258
- US-A1- 2008 318 774
- US-A1- 2014 106 008
- Cherife J and others: "In vitro antibacterial activity of concentrated polyethylene glycol 400 solutions.", Antimicrobial agents and chemotherapy, 8 February 2011 (2011-02-08), pages 409-412, XP055453924, America DOI: 10.1016/j.actbio.2011.10.004 Retrieved from the Internet: URL:https://www.ncbi.nlm.nih.gov/pmc/artic les/PMC185333/pdf/aac00198-0113.pdf
- DATABASE EMBASE [Online] ELSEVIER SCIENCE PUBLISHERS, AMSTERDAM, NL; 1948, ROBERTSON O H ET AL: "A study of the bactericidal activity in vitro of certain glycols and closely related compounds", XP002778521, Database accession no. EMB-0007201192 & JOURNAL OF INFECTIOUS DISEASES 1948, vol. 83, no. 2, 1948, pages 124-137, ISSN: 0022-1899
- DATABASE WPI Week 200851, 29 October 2014 Derwent Publications Ltd., London, GB; Class C03, AN 2008-H99709, XP055381554 & JP 2008 127366 A (TSUB) 05 June 2008
- DATABASE WPI Week 199342, 29 October 2014 Derwent Publications Ltd., London, GB; Class C03, AN 1993-331338, XP055381552 & JP H05 238 913 A (SUNR) 17 September 1993

## Description

### Technical Field of the Invention

The invention relates to biocidal formulations with a bacteriostatic agent. The bacteriostatic agent contains an aqueous solution of a polyol and a dispersing agent, wherein the polyol/dispersing agent ratio is comprised between 30:1 (weight/weight) and 110:1 (weight/weight).

### Background of the Invention

In recent years there has been interest in developing environmentally-friendly plant protection products that do not contain components that are toxic for humans or for the ecosystem, green biocides being developed. Different families, species and strains of bacteria with biocidal activity, such as *Bacillus spp., Pseudomonas spp.* or yeasts, for example, stand out among green biocides. The biocidal activity of different proteins with insecticidal properties such as cystatins, for example, has also been described.

Strains of bacteria and yeasts are stored in spores adsorbed in inert substrates, such as the kaolin, silica, zeolites, zinc oxides, clays, diatomaceous earth, polysaccharides or carbonates. Proteins are also immobilized in inert substrates.

To use the microorganisms in liquid formulations it is necessary to formulate a stable suspension, i.e., a suspension in which separations or precipitations of the inert material will not occur over time.

It is known that aqueous solutions must contain bacteriostatic agents or preservatives to prevent microbial contamination. The use of parabens, azides or isothiazolines for this purpose is known. However, these products are toxic and environmental pollutants and therefore not suitable for being used in "green plant protection agents/biocides".

In turn, it is known that the plant protection agents described in the state of the art are harmful to health due to the presence of toxic preserving agents and biocidal agents. The application of plant protection agents requires taking the necessary precautions to prevent the operator against poisoning: goggles, gloves and applying the product downwind.

Based on the foregoing, liquid formulations comprising biological material have different drawbacks:
- solutions must be homogenous and must not show phase separation over time,
- the formulations must maintain their biocidal activity over time, i.e., the microorganism or protein must be viable for at least two years,
- the formulations must not be contaminated with exogenous microorganisms without using bactericidal agents or preservatives.

The person skilled in the art knows of the existence of dispersing agents assuring stability of the suspensions, but the dispersing agents are incompatible with the subsequent viability of the bacteria. In addition, water content is a critical factor; a low water concentration does not assure proper homogenization of the suspensions, precipitation of the excipients or carriers of the bacteria occurring, and in addition, excessive water content will accelerate microbial contamination of the formulations by other species of bacteria or fungi.

WO200624095, CN101048136, CA110384 and US2006270745 disclose compositions comprising solutions comprising polyols and dispersing agents that are used for formulating oil/water (O/W) emulsions and microemulsions.

ES 2370561 discloses suspensions with biocidal activity in glycerine with at least 60% by weight being used in the formulations of plant protection products. These suspensions contain dispersing agents, but to prevent exogenous microbiological contamination they use different preservatives such as benzoisothiazolines. The examples detailed in ES2370561 use a polyol/dispersing agent ratio of less than 30:1.

WO2009126647 discloses an aqueous formulation comprising at least one spore at a concentration of between 3-80% (weight/weight), at least one water-miscible solvent and/or a hydrophobic agent. This patent document does not describe any ratio between the polyols which can be water-miscible solvents, and the dispersing agents present in the invention. This patent document also describes the use of preserving agents to prevent exogenous microbiological contamination.

### Object of the Invention

The present disclosure is directed to an environmentally-friendly bacteriostatic agent that prevents exogenous microbial contamination in aqueous solutions and assures stability of the suspensions over time. It is disclosed a solution containing a polyol and a dispersing agent, wherein the polyol/dispersing agent ratio is comprised between 30:1 (weight/weight) and 110:1 (weight/weight).

Another advantage is that it assures physical stability of the bacterial suspensions inoculated into their inert carrier. Suspensions in which precipitation of suspended inert solids is not observed are obtained by means of selecting sodium polycarboxylate or condensed naphthalene sulfonate as dispersing agents.

Additionally, the high polyol concentration provides the suspensions with high viscosity, and the use of rheological modifiers, such as xanthan gum, is prevented.

Another problem solved is that it assures viability of the microorganisms and proteins in the suspensions and the biocidal activity of the formulations.

The biocidal formulations with *Bacillus subtilis* showed the same effectiveness as the solid formulations of *Bacillus subtilis* against Sclerotinia in lettuce, Botrytis in tomatoes and Monilia in peaches. The effectiveness was similar to that of chemical fungicides such as thianosan.

The biocidal formulations with cystatins showed activity against different species of mites, mainly *Tetranychus urticae.*

The formulations obtained with the bacteriostatic agent as a diluent are suitable for the treatment of legumes, olive tree, ornamental plants, grape vines, fruit trees, corn, cotton, citrus fruits, vegetables, strawberries, bulbs, oilseed plants, etc.

### Description of the Invention

In a first aspect, there is provided an aqueous solution of a polyol and a dispersing agent, wherein the polyol/dispersing agent ratio is comprised between 30:1 (weight/weight) and 110:1 (weight/weight).

The dispersing agents comprise alkyl-sulfonates or salts of sulfuric esters derived from monoalcohols, sulfonates or salts of sulfuric esters of polyalcohols or of amino alcohols or of the derivatives thereof, esters of higher fatty acids with hydroxyalkylsulfonic acids or the salts thereof, products from the sulfation or the sulfonation of fats, oils, waxes or higher fatty acids, or of the esters thereof, with monoalcohols, derivatives of sulfocarboxylic or sulfopolycarboxylic acids of low molecular weights, aryl- or alkylarylsulfonates, derivatives of phosphoric acid, amines or polyamines, compounds of quaternary ammonium, compounds of phosphonium and sulfonium, amides, sulfonamides, amino-carboxylic acids, protein hydroxylates, carboxylic acid esters, lignin derivatives, natural or synthetic resins or the salts thereof, glucosides, mucilages or saponins.

Polyols are compounds having several free or esterified hydroxyl groups, e.g., glycerine, sorbitol, monopropylene glycol or mannitol.

The solutions obtained after adding the polyol/dispersing agent mixture to different amounts of water did not show bacterial growth until the amount of water was greater than 50% (weight/weight).

The dispersants used were sodium polycarboxylate, condensed sodium naphthalene sulfonate, sodium alkylsulfonate, amphoteric polymeric dispersants, acrylic polymers of modified styrene.

In a second aspect, the invention provides suspensions with biocidal activity comprising:
- an inert solid with a particle size less than 40 microns,
- buffer media,
- a biocidal agent selected from a strain of *Bacillus subtilis* or a cystatin, and
- an aqueous diluent containing a polyol and dispersing agent, wherein the polyol/dispersing agent ratio is comprised between 30:1 (weight/weight) and 110:1 weight/weight); the dispersing agent is condensed naphthalene sulfonate or sodium polycarboxylate and the water content is less than 50% (weight/weight) of the biocidal formulation.

The best results, without persistent foaming, were obtained when the dispersing agent was sodium polycarboxylate or sodium naphthalene sulfonate, the polyol/dispersing agent ratio was 50:1 (weight/weight) and the water content was less than 50% (weight/weight) of the total suspension.

Suitable inert solids are kaolin, zeolites or silicates.

The buffer media assure stability of the biocidal agent at a given pH. Citrates or phosphates can be cited among buffering systems.

Additionally, the suspensions can contain different wetting agents such as ethoxylated sorbitan esters, ethoxylated alcohols, alkyl polyglucosides and the salts thereof, sorbitol esters, for the purpose of assuring a suitable drop size in the application of the product and the proper adherence thereof on the leaf surface. The concentration of wetting agents is comprised between 0-2% by weight.

The production of the biocidal suspensions is performed according to the following method. The titrated bactericidal agent is adsorbed in an inert carrier; the aqueous solution is then prepared together with the dispersants and the buffering agent to complete dissolution, the biocidal agent adsorbed in its inert carrier is added under constant stirring between 1000 and 1500 rpm with a Cowles-type disperser until complete incorporation and it is taken to volume with the polyol until reaching the desired concentration of biocidal agent and of the polyol/dispersing agent ratio.

The preceding method is suitable for any biocidal agent of natural origin:
- Bacteria: *Pseudomonas spp, Bacillus spp.* such as: *Bacillus aizawai, Bacillus cereus, Bacillus firmus, Bacillus kurstaki, Bacillus lentimorbus, Bacillus licheniformis, Bacillus megaterium, Bacillus popilliae, Bacillus pumilus, Bacillus sphaericus, Bacillus thuringiensis, Bacillus subtilis, Bacillus polymixa, Azotobacter vinelandii, Rhizobium leguminosarum,*
- Fungi and yeasts of the class *Basidiomycetes, Chytridiomycetes, Deuteromycetes, Hyphochytridiomycetes, Oomycetes, Plasmodiophoromycetes, Sordariomycetes, Trichomycetes* and *Zygomycetes,* specifically the species *Arlhrobolrys superba, Arlhrobolrys irregular, Beauveria bassiana, Fusarium spp., Hirsulella rhossiliensis, Hirsulella lhompsonii, Lagenidium giganleum, Myrolhecium, Nomuraea rileyi, Paecilomyces lilacinus, Trichoderma spp., Vericillium lecanii,* and/or *Verlicillium lecanii, Beauveria bassiana, Paecilomyces lilacinus* and *Saccharomyces spp.*
- Proteins: cystatins

Accelerated stability studies at 54ºC did not cause a reduction in viability of the microorganisms after 14 days and these results assure that the bacterial suspension at room temperature (20ºC) will be stable for at least 2 years.

For use in agriculture, the suspensions are diluted in water before application.

### Example 1. Bacteriostatic activity of the polyol/dispersing agent mixtures

Different samples were prepared by changing the ratio of polyol/dispersing agent in water. The samples were stored in a closed bottle at 20ºC for 6 months. The colony forming units were determined according to the method described in the US Pharmacopoeia. These examples are for reference only.

| | Polyol=P | Weight | Dispers. =D | Weight | Water | P/D | Water | D |
|---|---|---|---|---|---|---|---|---|
| | | (g) | | (g) | (g) | | (%) | (%) |
| 1 | Glycerine | 50.1 | Atlox 4915 | 1.0 | 30 | 50.1 | 37% | 1.2 |
| 2 | Glycerine | 50.6 | Emulson AGPSBV 4 | 1.2 | 30 | 42.2 | 37% | 1.5 |
| 3 | Glycerine | 52.1 | Atlox Metarsperse 500 L | 1.2 | 30 | 43.4 | 36% | 1.4 |
| 4 | Glycerine | 50.5 | Emulson AG/TP1 | 1 | 30 | 50.5 | 37% | 1.2 |
| 5 | Glycerine | 50.6 | Emulson AGPSBV 4 | 1.3 | 30 | 38.9 | 37% | 1.1 |
| 6 | Glycerine | 50.9 | Emulson AG TRST60 | 1.3 | 30 | 39.2 | 36% | 1.6 |
| 7 | Glycerine | 50.1 | Madeol AG W 90 | 1.3 | 30 | 38.5 | 37% | 1.6 |
| 8 | Glycerine | 52 | Madeol MW | 1.3 | 30 | 40.0 | 36% | 1.6 |
| 9 | Glycerine | 50.8 | Madeol AG OR 95 | 0.9 | 30 | 56.4 | 37% | 1.1 |
| 10 | | | Emulson AGPSBV 4 | 1.04 | | | | |
| 10 | | | Madeol AG W 90 | 0.03 | | | | |
| 10 | Sorbitol | 84 | Total | 1.07 | 44 | 78.1 | 34% | 0.8 |
| 11 | Monopropylene glycol | 50.1 | Madeol AG W 90 | 1.2 | 30 | 41.8 | 37% | 1.5 |
| 12 | Glycerine | 1148 | Emulson AGPSV 4 | 10.0 | 80 | 114.4 | 6% | 0.8 |
| 13 | PEG-200 | 50 | Atlox | 0.9 | 30 | 55.6 | 37% | 1.1 |
| | | | 4915 | | | | | |
| 14 | PEG-200 | 60 | Emulson AGPSBV 4 | 0.9 | 30 | 55.6 | 37% | 0.9 |
| 15 | PEG-400 | 70 | Atlox Metarsperse 500 L | 1 | 40 | 70.0 | 36% | 1.1 |
| 16 | PEG-200 | 70 | Emulson AGPSBV 4 | 1 | 40 | 70.0 | 36% | 1.1 |
| 17 | Mannitol | 50 | Emulson AGPSBV 4 | 0.9 | 30 | 55.5 | 37% | 1.1 |
| 18 | PEG-200 | 84 | Atlox 4915 | 1.06 | 44 | 78.1 | 34% | 0.8 |

| | | | | | | | | |
|---|---|---|---|---|---|---|---|---|
| where Atlox 4915 is an amphoteric polymeric dispersant, Emulson AG PS BV 4 is a sodium polycarboxylate, Atlox Metarsperse 500 L is a modified acrylic styrene polymer, Emulson AG/TP1 is an acrylic derivative in an aqueous dispersion, Emulson AG TRST60 is an amino salt of a polyaryl phosphate ester, Madeol AG/PWA is a sodium salt of an alkyl naphthalene sulfate, Madeol AG W 90 is a condensed naphthalene sulfonate, Madeol MW is a condensed alkyl naphthalene sulfonate, Madeol AG OR 95 is a condensed naphthalene sulfonate. | | | | | | | | |

After incubation in all the samples, the microbial load was less than 1000 colony forming units per gram (< 1000 CFU/g).

### Example 2. Stability of the suspensions

Different suspensions in water of an inert material with a particle size of 40 microns were prepared with different polyol/dispersing agent mixtures and with different inert solids.

| | Polyol | Weight | Dispers. | Weight | Water | Solid | Weight |
|---|---|---|---|---|---|---|---|
| | | (g) | | (g) | (g) | | (g) |
| 1 | Glycerine | 50.1 | Atlox 4915 | 1 | 30 | Kaolin | 1 |
| 2 | Glycerine | 50.6 | Emulson AGPSBV 4 | 1.2 | 30 | Zeolite | 1.2 |
| 3 | Glycerine | 52.1 | Atlox Metarsperse 500 L | 1.2 | 30 | Kaolin | 1.2 |
| 4 | Glycerine | 50.5 | Emulson AG/TP1 | 1 | 30 | Silica | 1.1 |
| 5 | Glycerine | 50.6 | Emulson AGPSBV 4 | 1.3 | 30 | Kaolin | 1.0 |
| 6 | Glycerine | 50.9 | Emulson AG TRST60 | 1.3 | 30 | Kaolin | 1.1 |
| 7 | Glycerine | 50.1 | Madeol AG W 90 | 1.3 | 30 | Kaolin | 1.3 |
| 8 | Glycerine | 52.0 | Madeol MW | 1.3 | 30 | Kaolin | 1.3 |
| 9 | Glycerine | 50.8 | Madeol AG OR 95 | 0.9 | 30 | Kaolin | 1.0 |
| | | | Emulson AGPSBV 4 | 1.04 | | | |
| | | | Madeol AG W 90 | 0.03 | | | |
| 10 | Sorbitol | 84.0 | Total | 1.07 | 44 | Kaolin | 0.1 |
| 11 | Monopropylene glycol | 50.1 | Madeol AG W 90 | 1.2 | 30 | Kaolin | 1.2 |
| 12 | Glycerine | 50 | -------- | 0 | 30 | Kaolin | 1.1 |
| 13 | Sorbitol | 50.0 | Atlox 4915 | 1 | 30 | Kaolin | 1 |
| 14 | Sorbitol | 50.6 | Emulson AGPSBV 4 | 1.2 | 30 | Zeolite | 1.2 |
| 15 | Sorbitol | 52.1 | Atlox Metarsperse 500 L | 1.2 | 30 | Kaolin | 1.2 |
| 16 | Sorbitol | 50.5 | Emulson AG/TP1 | 1.0 | 30 | Silica | 1.1 |
| 17 | Sorbitol | 50.6 | Emulson AGPSBV 4 | 1.3 | 30 | Kaolin | 1.0 |
| 18 | Sorbitol | 50.9 | Emulson AG TRST60 | 1.3 | 30 | Kaolin | 1.1 |
| 19 | Sorbitol | 50.1 | Madeol AG W 90 | 1.3 | 30 | Kaolin | 1.3 |
| 20 | Sorbitol | 52.0 | Madeol MW | 1.3 | 30 | Kaolin | 1.3 |
| 21 | Sorbitol | 50.8 | Madeol AG OR 95 | 0.9 | 30 | Kaolin | 1 |
| 22 | Sorbitol | 49 | -------- | 0 | 30 | Kaolin | 1.3 |
| 23 | Glycerine | 1148 | Emulson AGPSBV 4 | 10.0 | 80 | Kaolin | 1 |
| 24 | PEG-200 | 1148 | Madeol AG OR 95 | 10.1 | 80 | Silica | 1 |
| 25 | Mannitol | 1149 | Madeol AG OR 95 | 10.0 | 81 | Kaolin | 1.2 |

The samples were centrifuged for 15 minutes at 1735 rpm with a Cowles-type agitator.

The results show that when condensed naphthalene sulfonate or sodium polycarboxylate is used as a dispersant, precipitation of the dispersed solids is not observed after centrifugation.

Samples 12 and 22, without dispersing agents, showed the precipitation of kaolin.

The presence of persistent foam or the presence of precipitated solids was observed in the other cases.

### Example 3. Stability of the suspensions according to the solids content

Different suspensions were prepared using sodium polycarboxylate (Emulson AG PS BV 4) as a dispersing agent. Different amounts of inert solid were added. Sample 6 is for reference only.

| | Polyol | Weight | Dispers. | Weight | Water | Solid | Weight |
|---|---|---|---|---|---|---|---|
| | | (g) | | (g) | (g) | | (g) |
| 1 | Glycerine | 50.6 | Emulson AGPSBV 4 | 1.2 | 30 | Kaolin | 10.1 |
| 2 | Sorbitol | 50.4 | Emulson AGPSBV 4 | 1.2 | 30 | Kaolin | 5.5 |
| 3 | Monopropylene glycol | 49.5 | Emulson AGPSBV 4 | 1.3 | 30 | Kaolin | 2.6 |
| 4 | Glycerine | 50.1 | Emulson AGPSBV 4 | 1.3 | 30 | Kaolin | 20.0 |
| 5 | | | Emulson AGPSBV 4 | 10.03 | | | |
| 5 | | | Tween 85 | 8.57 | | | |
| 5 | Glycerine | 1148 | Total | 18.6 | 77.9 | Kaolin | 1.1 |
| 6 | PEG-200 | 1156 | Emulson AGPSBV 4 | 17.7 | 80.0 | Kaolin | 1.1 |

No precipitates were observed after centrifuging for 15 minutes at 1735 rpm.

### Example 4. Producing bacterial suspensions with biocidal activity

0.10 grams of kaolin containing 10¹⁰ cfu/g of *Bacillus subtilis* strain IAB, obtained according to ES24002726, was dissolved in distilled water, the dispersing agents were added and the suspension was homogenized. The suspension was then diluted to 100 grams (cps) with polyols. The pH of the suspension was adjusted to pH 7 with citric acid. The concentration of the obtained suspension was 10⁷ cfu/g. Sample 7 is for reference only.

The dispersing agents and polyols used were:

| Sample | Weight of water (g) | Dispersing agent | Weight of dispersing agent (g) | Polyol cps 100 g |
|---|---|---|---|---|
| 1 | 7.5 | Emulson AGPSBV 4 | 1.20 | Glycerine |
| 2 | 6.0 | Madeol AG W 90 | 1.50 | Sorbitol 70% |
| 3 | 7.6 | Emulson AGPSBV 4 | 2.50 | Monopropylene glycol |
| 4 | 8.0 | Emulson AGPSBV 4 | 2.30 | Glycerine |
| 5 | 12.3 | Madeol AG W 90 | 3.60 | Sorbitol 70% |
| 6 | 7.5 | Madeol AG W 90 | 1.65 | Monopropylene glycol |
| 7 | 7.6 | Emulson AGPSBV 4 | 1.20 | PEG-200 |
| 8 | 7.5 | Emulson AGPSBV 4 | 1.19 | Mannitol |

The bacterial suspensions were prepared without adding preserving agents, such as azides, isothiazolines or parabens.

### Example 5. Effectiveness of the suspensions against Sclerotinia in lettuce

A liquid bacterial suspension of *Bacillus subtilis* strain IAB with a concentration of 10⁷ cfu/g was as effective against Sclerotinia in lettuce as a solid formulation of *Bacillus subtilis* strain QST 713 in diatomaceous earth with a concentration of 5.13^{∗}10¹⁰ cfu/g.

The quantitative composition of the suspension was:

| | |
|---|---|
| Emulson AGPSBV 4: | 1.2 grams |
| Water: | 7.6 grams |
| Kaolin: | 1.2 grams |
| Glycerine: | 91.2 grams |
| pH: | 7.1 |
| Polyol/dispersing agent ratio: | 75:1 |

The bacterial suspension with a concentration of 10⁷ cfu/g was diluted to different concentrations in water: 300 mL/100 L; 600 mL/100 L; 1000 mL/100 L, and these dilutions were used as biocidal agent against Sclerotinia in lettuce

Serenade Max® at 15.65% was used as a control biocidal agent at a dose of 4 kg/Ha, which is almost equivalent to 4 mL/100 L.

Biocidal activity was observed in all samples.

### Example 6. Producing suspensions of proteins with biocidal activity

100 mg of a cystatin in 1 gram of kaolin was dispersed in 7.7 grams of distilled water. 1.04 grams of sodium polycarboxylate (Emulson AG PS BV 4) and 0.03 of condensed naphthalene sulfonate were added. The mixture was homogenized and 119.34 grams of sorbitol 70 were added. The pH of the suspension was adjusted to pH 7 with citric acid. Concentration of the suspension was 10⁷ cfu/g. The suspension that was produced inhibited the activity of cathepsins, so the suspensions of proteins do not lose biocidal activity of the cystatins.

### Example 7. Stability study of the bacterial suspensions of Bacillus subtilis

An accelerated stability study of a bacterial suspension of *Bacillus subtilis* strain IAB with a concentration of 1^{∗}10⁷ cfu/g obtained according to Example 4, sample 1, was performed.

The mean parameters were appearance, pH, concentration of the active ingredient, stability of the diluted suspension at 5%.

The storage conditions were 14 days at 54ºC, the samples being packaged into closed plastic bottles.

The obtained results are detailed below:

| Assay | Specification | T=0 | T=54 days |
|---|---|---|---|
| Aspect | Yellowish homogenous dispersion with characteristic odor | Compliant | Compliant |
| pH | 7-7.5 | 7.25 | 7.22 |
| Stability of the suspension at 5% | Homogenous after 18 hours | Compliant | Compliant |
| *B. subtilis* | Greater than 10⁷ cfu/g | 1.40^{∗}10⁷ cfu/g | 1.38^{∗}10⁷ cfu/g |

The obtained results assure stability of the suspension for 2 years at room temperature.

### Example 8. Effectiveness against Botrytis in tomatoes (Reference example)

A liquid biocidal formulation of *Bacillus subtilis* strain IAB with a concentration of 10⁷ cfu/g was as effective against Botrytis in tomatoes as a solid formulation of *Bacillus subtilis* strain QST 713 in diatomaceous earth with a concentration of 5.13^{∗}10¹⁰ cfu/g.

The quantitative composition was:

| | |
|---|---|
| Madeol AG W 90: | 2.1 grams |
| Water: | 8.6 grams |
| Kaolin: | 1.1 grams |
| Polyethylene glycol 200: | 83.4 grams |
| pH: | 7.1 |
| Polyol/dispersing agent ratio: | 39:1 |

The bacterial suspension with a concentration of 10⁷ cfu/g was diluted to different concentrations in water: 1 L/ha; 2 L/ha 1; 3 L/ha, and these dilutions were used as a biocidal agent against Sclerotinia in lettuce.

Serenade Max® at 15.65% was used as a control biocidal agent with a dose of 4 kg/Ha, which is almost equivalent to 4 mL/100 L.

Biocidal activity was observed in all samples.

### Example 9. Effectiveness against Monilia in peaches (Reference example)

A liquid biocidal formulation of *Bacillus subtilis* strain IAB with a concentration of 10⁷ cfu/g was as effective against Monilia in peaches as a solid formulation of *Bacillus subtilis* strain QST 713 in diatomaceous earth with a concentration of 5.13^{∗}10¹⁰ cfu/g.

| | |
|---|---|
| Madeol AG W 90: | 2.0 grams |
| Water: | 8.6 grams |
| Kaolin: | 1.5 grams |
| Polyethylene glycol 400 : | 83.8 grams |
| pH: | 7.5 |
| Polyol/dispersing agent ratio: | 42:1 |

Phase separation was not observed in the suspension.

The bacterial suspension with a concentration of 10⁷ cfu/g was diluted to different concentrations in water: 1 L/ha; 2 L/ha l; 3 L/ha, and these dilutions were used as a biocidal agent against Sclerotinia in lettuce

Serenade Max® at 15.65% was used as a control biocidal agent at a dose of 4 kg/Ha, which is almost equivalent to 4 mL/100 L.

Biocidal activity was observed in all samples.

### Example 10. Effectiveness of the formulations of cystatin (Reference example)

A liquid biocidal formulation of cystatin with a concentration of 1% w/w was as effective against *Tetranychus urticae* as a formulation of Abamectin with a concentration of 1.8% w/w.

The cystatin-based biocidal suspension, with a concentration of 1% w/w and with the following excipients:

| | |
|---|---|
| Madeol AG W 90: | 2.1 grams |
| Water: | 8.6 grams |
| Kaolin: | 1.2 grams |
| Polyethylene glycol 200: | 83.4 grams |
| pH: | 7.1 |
| Polyol/dispersing agent ratio: | 39:1, |

was diluted in water at a concentration of 20 mL/L, and this dilution was used as a biocidal agent against *Tetranychus urticae* in strawberry farming.
LAOTTA® at 1.8% was used as a control biocidal agent at a dose of 100 mL/100 L.

Biocidal activity was observed in all samples.

## Claims

1. A biocidal formulation comprising:
- an inert solid with a particle size less than 40 microns,
- a strain of *Bacillus subtilis* or a cystatin as biocidal agent,
- buffer media,
- a diluent formed by an aqueous solution containing a polyol and a dispersing agent,
**characterised in that** the polyol/dispersing agent ratio is comprised between 30:1 (weight/weight) and 110:1 (weight/weight); the dispersing agent is condensed naphthalene sulfonate or sodium polycarboxylate and its water content is less than 50 % (weight/weight) of the biocidal formulation.

2. The formulation according to claim 1 **characterized in that** the polyol is monopropylene glycol, glycerine, mannitol or sorbitol.

3. The formulation according to claim 1, **characterized in that** it additionally comprises a wetting agent.

4. Use of the biocidal formulations according to any previous claim for producing a biocide against Sclerotinia in lettuce, Monilia in peaches and Botrytis in tomatoes when the biocidal agent is Bacillus subtilis or Tetranychus urticae in strawberries when the biocidal agent is cystatin.

5. A method for obtaining a biocidal formulation comprising:
- adsorbing a strain of *Bacillus subtilis* or a cystatin in an inert solid,
- dispersing in an aqueous solution containing a polyol and dispersing agents by means of stirring,
- adding water until reaching the desired concentration of biocidal agent,
- adjusting the pH,
**characterised in that** the polyol/dispersing agent ratio is comprised between 30:1 and 110:1 (weight/weight); the dispersing agent is condensed naphthalene sulfonate or sodium polycarboxylate and the water content is less than 50 % (weight/weight) of the preservative-free biocidal formulation.

## Patentansprüche

1. Biozide Formulierung umfassend:
- einen inerten Feststoff mit einer Partikelgröße kleiner als 40 Mikrometer,
- einen *Bacillus subtilis-Stamm* oder ein Cystatin als biozides Mittel
- Puffermedien,
- ein Verdünnungsmittel, gebildet aus einer wässrigen Lösung, welche ein Polyol und ein Dispergiermittel enthält,
**dadurch gekennzeichnet, dass** das Polyol/Dispergiermittel-Verhältnis zwischen 30:1 (Gewicht/Gewicht) und 110:1 (Gewicht/Gewicht) liegt; wobei das Dispergiermittel kondensiertes Naphthalinsulfonat oder Natriumpolycarboxylat ist und dessen Wassergehalt weniger als 50% (Gewicht/Gewicht) der bioziden Formulierung ist.

2. Formulierung nach Anspruch 1, **dadurch gekennzeichnet, dass** das Polyol Monopropylenglycol, Glycerin, Mannit oder Sorbit ist.

3. Formulierung nach Anspruch 1, **dadurch gekennzeichnet, dass** sie zusätzlich ein Benetzungsmittel umfasst.

4. Verwendung der bioziden Formulierungen nach einem der vorhergehenden Ansprüche zur Herstellung eines Biozids gegen *Sclerotinia* im Salat, *Monilia* in Pfirsichen und *Botrytis* in Tomaten, wenn das biozide Mittel *Bacillus subtilis* ist, oder *Tetranychus urticae* in Erdbeeren, wenn das biozide Mittel Cystatin ist.

5. Verfahren zum Erhalten einer bioziden Formulierung umfassend:
- das Adsorbieren eines *Bacillus* subtilis-Stammes oder eines Cystatins in einem inerten Feststoff,
- das Dispergieren in einer wässrigen Lösung, welche ein Polyol und Dispergiermittel enthält, mittels Rührens,
- das Hinzufügen von Wasser bis die gewünschte Konzentration des bioziden Mittels erreicht wird,
- das Einstellen des pH-Wertes,
**dadurch gekennzeichnet, dass** das Polyol/Dispergiermittel-Verhältnis zwischen 30:1 und 110:1 (Gewicht/Gewicht) liegt; wobei das Dispergiermittel kondensiertes Naphthalinsulfonat oder Natriumpolycarboxylat ist und der Wassergehalt weniger als 50% (Gewicht/Gewicht) der konservierungsstofffreien bioziden Formulierung ist.

## Revendications

1. Formulation biocide comprenant :
- un solide inerte ayant une taille des particules inférieure à 40 microns,
- une souche de *Bacillus subtilis* ou une cystatine en tant qu'agent biocide,
- des milieux tampons,
- un diluant composé d'une solution aqueuse contenant un polyol et un agent dispersant,
**caractérisée en ce que** le rapport de polyol/agent dispersant est compris entre 30:1 (poids/poids) et 110:1 (poids/poids); l'agent dispersant est du sulfonate de naphthalène condensé ou du polycarboxylate de sodium et son contenu en eau est inférieur à 50% (poids/poids) de la formulation biocide.

2. Formulation selon la revendication 1, **caractérisée en ce que** le polyol est du monopropylène glycol, de la glycérine, du mannitol ou du sorbitol

3. Formulation selon la revendication 1, **caractérisée en ce qu'**elle comprend en outre un agent humectant.

4. Utilisation des formulations biocides selon l'une quelconque des revendications précédentes pour produire un biocide contre la *Sclérotinia* dans la laitue, la *Monilia* dans les pêches et le *Botrytis* dans les tomates lorsque l'agent biocide est le *Bacillus subtilis* ou le *Tetranychus urticae* dans les fraises lorsque l'agent biocide est de la cystatine.

5. Procédé d'obtention d'une formulation biocide comprenant :
- l'absorption d'une souche de *Bacillus subtilis* ou une cystatine dans un solide inerte,
- la dispersion dans une solution aqueuse contenant un polyol et des agents dispersants par le biais de brassage,
- l'addition d'eau jusqu'à l'obtention de la concentration voulue d'agent biocide,
- l'ajustement du pH
**caractérisé en ce que** le rapport de polyol/agent dispersant est compris entre 30:1 et 110:1 (poids/poids); l'agent dispersant est du sulfonate de naphthalène condensé ou du polycarboxylate de sodium et le contenu en eau est inférieur à 50% (poids/poids) de la formulation biocide sans conservateur.
